# FASCICULE DE BREVET EUROPEEN

(11) **EP 4 405 201 B1**
(45) Date de publication et mention de la délivrance du brevet: **27.08.2025**
(21) Numéro de dépôt: 22755260.1
(22) Date de dépôt: 25.07.2022
(51) Int. Cl.: B60L 53/60, G01C 21/26, G01C 21/36

(54) **PROCÉDÉ ET DISPOSITIF DE SÉLECTION D'UNE BORNE DE RECHARGE POUR UN VÉHICULE À MOTORISATION ÉLECTRIQUE**
VERFAHREN UND VORRICHTUNG ZUR AUSWAHL EINER LADESTATION FÜR EIN ELEKTRISCH ANGETRIEBENES FAHRZEUG
METHOD AND DEVICE FOR SELECTING A CHARGING STATION FOR AN ELECTRICALLY POWERED VEHICLE

(30) Priorité: 21.09.2021 FR 2109940
(43) Date de publication de la demande: 31.07.2024
(73) Titulaire: Stellantis Auto SAS, 78300 Poissy (FR)
(72) Inventeur: ELKABIR, Taoufik, Dar Bouazza, 27223 (MA); HADOUNI, Doha, Dar Bouazza, 27223 (MA)
(74) Mandataire: ESIP
(86) Numéro de dépôt international: PCT/FR2022/051483
(87) Numéro de publication internationale: WO 2023/047026

(56) Documents cités:
- CN-A- 110 139 214
- CN-A- 112 367 662
- CN-B- 105 359 601
- US-A1- 2008 262 725

## Description

### Domaine technique

La présente invention concerne les procédés et dispositifs de sélection d'une borne de recharge pour un véhicule à motorisation électrique, notamment un véhicule automobile. La présente invention concerne également un procédé et un dispositif de localisation d'une borne de recharge pour un véhicule à motorisation électrique.

### Arrière-plan technologique

Les dernières années ont vu l'émergence d'un nombre de plus en plus important de véhicules électriques fonctionnant sur batterie, les véhicules électriques incluant les véhicules avec uniquement un moteur électrique ou les véhicules dits hybrides rechargeables avec un moteur thermique et un moteur électrique.

De tels véhicules nécessitent de recharger les batteries. Avec l'augmentation du nombre de véhicules électriques, les besoins en termes de bornes de recharge (aussi appelées points de charge) augmentent également. L'autonomie des véhicules électriques étant limitée, il est très important de connaitre en temps réel où se situent les bornes de recharge les plus proches pour éviter d'arriver en limite de charge.

Il est connu d'équiper les véhicules contemporains d'outils de navigation, ces outils prenant la forme de systèmes embarqués et intégrés aux véhicules ou la forme d'application mobile installé sur un dispositif de communication mobile tel qu'un téléphone intelligent (de l'anglais « Smartphone »). Avec de tels outils, il est possible de suivre le trajet effectué par un véhicule électrique en exploitant les données de localisation géographique de ce véhicule en temps réel. L'exploitation de telles données rend alors possible de proposer au véhicule la ou les bornes de recharge les plus proches.

Des exemples de l'état de la technique peuvent être trouvés dans les documents US2008262725A1, CN105359601B, CN110139214A, et CN112367662A.

Cependant, une telle approche pose le problème du traitement des données personnelles, l'exploitation de telles données étant limitées par la législation ou la réglementation, notamment européenne. Ainsi, l'exploitation de ces données est réglementée par le règlement général sur la protection des données, dit RGPD. A ce titre, toute entreprise collectant des données personnelles doit se mettre en conformité avec le RGPD, la collecte des données sur les trajets effectués par un véhicule étant réglementée, notamment par la RGPD.

### Résumé de la présente invention

Un objet de la présente invention est de résoudre au moins l'un des problèmes de l'arrière-plan technologique décrit précédemment.

Un autre objet de la présente invention est de déterminer en temps réel la ou les bornes les plus proches d'un véhicule, notamment en respectant le traitement des données personnelles.

Selon un premier aspect, la présente invention concerne un procédé de sélection d'une borne de recharge pour un véhicule à motorisation électrique selon la revendication

Selon une variante, le procédé comprend en outre les étapes suivantes, pour chaque arrêt et chaque démarrage du moteur dudit véhicule pendant un intervalle temporel antérieur à l'instant courant :
- réception, via la liaison sans fil, de deuxièmes données représentatives de chaque arrêt ou chaque démarrage, les deuxièmes données comprenant une information représentative d'une deuxième position du véhicule associée à un instant temporel particulier de l'intervalle temporel antérieur ;
- détermination d'une deuxième position approximative de l'ensemble de deuxièmes positions approximatives du véhicule à l'instant temporel particulier en appliquant à la deuxième position une deuxième distance sélectionnée aléatoirement dans l'intervalle déterminé de distances.

Selon une autre variante, le procédé comprend en outre les étapes suivantes :
- détermination d'un ensemble de zones de stationnement du véhicule à partir des deuxièmes positions approximatives associées à un arrêt du moteur et des deuxièmes positions approximatives associées à un démarrage du moteur ;
- sélection de la pluralité de bornes de recharge dans l'ensemble de bornes de recharges en fonction de l'ensemble de zones de stationnement, la pluralité de bornes de recharge sélectionnées correspondant aux bornes de recharges de l'ensemble localisées à une distance inférieure à un seuil déterminé de chaque zone de stationnement.

Selon une variante supplémentaire, le procédé comprend en outre une association d'un rang à chaque zone de stationnement de l'ensemble, le rang étant déterminé en fonction d'un nombre d'occurrences de stationnement du véhicule dans chaque zone de stationnement et d'une durée de stationnement du véhicule pour chaque stationnement dans la chaque zone de stationnement, la durée correspondant à un instant temporel entre un arrêt du moteur et le démarrage du moteur suivant l'arrêt.

Selon encore une variante, l'intervalle déterminé de distances correspond à un intervalle compris entre 0 et 200 m.

Selon une variante additionnelle, la sélection de la borne de recharge comprend une mise en œuvre d'une méthode de recherche des plus proches voisins.

Selon une autre variante, le procédé comprend en outre une étape d'affichage d'une information représentative de localisation de la borne de recharge sélectionnée sur un écran d'affichage embarqué dans le véhicule.

Selon un deuxième aspect, la présente invention concerne un dispositif de sélection d'une borne de recharge pour un véhicule à motorisation électrique, le dispositif comprenant une mémoire associée à un processeur configuré pour la mise en œuvre des étapes du procédé selon le premier aspect de la présente invention.

Selon un troisième aspect, la présente invention concerne un système comprenant un dispositif tel que décrit ci-dessus selon le deuxième aspect de la présente invention et un véhicule à motorisation électrique relié en communication au dispositif tel que décrit ci-dessus selon le deuxième aspect de la présente invention, le système étant configuré pour la mise en œuvre des étapes du procédé selon le premier aspect de la présente invention.

Selon un quatrième aspect, la présente invention concerne un programme d'ordinateur qui comporte des instructions adaptées pour l'exécution des étapes du procédé selon le premier aspect de la présente invention, ceci notamment lorsque le programme d'ordinateur est exécuté par au moins un processeur.

Un tel programme d'ordinateur peut utiliser n'importe quel langage de programmation, et être sous la forme d'un code source, d'un code objet, ou d'un code intermédiaire entre un code source et un code objet, tel que dans une forme partiellement compilée, ou dans n'importe quelle autre forme souhaitable.

Selon un cinquième aspect, la présente invention concerne un support d'enregistrement lisible par un ordinateur sur lequel est enregistré un programme d'ordinateur comprenant des instructions pour l'exécution des étapes du procédé selon le premier aspect de la présente invention.

D'une part, le support d'enregistrement peut être n'importe quel entité ou dispositif capable de stocker le programme. Par exemple, le support peut comporter un moyen de stockage, tel qu'une mémoire ROM, un CD-ROM ou une mémoire ROM de type circuit microélectronique, ou encore un moyen d'enregistrement magnétique ou un disque dur.

D'autre part, ce support d'enregistrement peut également être un support transmissible tel qu'un signal électrique ou optique, un tel signal pouvant être acheminé via un câble électrique ou optique, par radio classique ou hertzienne ou par faisceau laser autodirigé ou par d'autres moyens. Le programme d'ordinateur selon la présente invention peut être en particulier téléchargé sur un réseau de type Internet.

Alternativement, le support d'enregistrement peut être un circuit intégré dans lequel le programme d'ordinateur est incorporé, le circuit intégré étant adapté pour exécuter ou pour être utilisé dans l'exécution du procédé en question.

### Brève description des figures

D'autres caractéristiques et avantages de la présente invention ressortiront de la description des exemples de réalisation particuliers et non limitatifs de la présente invention ci-après, en référence aux figures 1 à 3 annexées, sur lesquelles :
[Fig. 1] illustre schématiquement un environnement de communication pour véhicule, selon un exemple de réalisation particulier et non limitatif de la présente invention ;
[Fig. 2] illustre schématiquement un dispositif configuré pour sélectionner une borne de recharge pour le véhicule de la figure 1, selon un exemple de réalisation particulier et non limitatif de la présente invention ;
[Fig. 3] illustre un organigramme des différentes étapes d'un procédé de sélection d'une borne de recharge pour le véhicule de la figure 1, selon un exemple de réalisation particulier et non limitatif de la présente invention.

### Description des exemples de réalisation

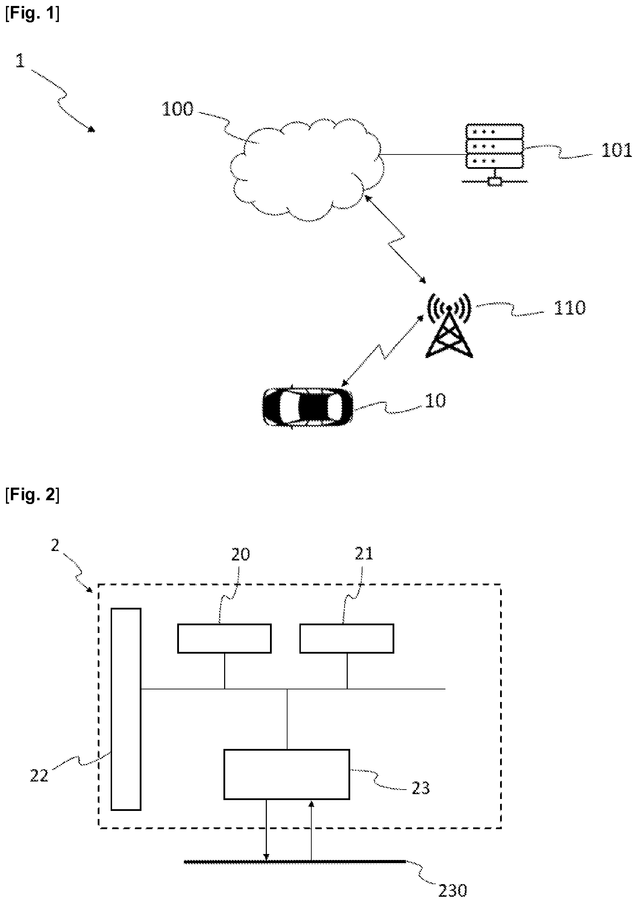

Un procédé et un dispositif de sélection d'une borne de recharge pour un véhicule à motorisation électrique vont maintenant être décrits dans ce qui va suivre en référence conjointement aux figures 1 à 3. Des mêmes éléments sont identifiés avec des mêmes signes de référence tout au long de la description qui va suivre.

Selon un exemple particulier et non limitatif de réalisation de la présente invention, la sélection d'une borne de recharge parmi une pluralité de bornes de recharge comprend la réception de premières données représentatives d'arrêt et/ou démarrage d'un moteur du véhicule à un instant déterminé, par exemple un instant courant. Ces premières données sont par exemple transmises par le véhicule à destination d'un dispositif distant, par exemple un serveur, via une liaison ou connexion sans fil. Les premières données comprennent avantageusement une information représentative d'une première position du véhicule à l'instant courant, cette première information étant par exemple obtenu d'un récepteur d'un système de positionnement par satellite embarqué dans le véhicule. Une première position approximative du véhicule à l'instant courant est déterminée en appliquant à la première position une première distance sélectionnée aléatoirement dans un intervalle déterminé de distances (la première distance étant par exemple comprise entre 0 et 200 m). Cette première position approximative est comparée avec une pluralité de positions associées à une pluralité de bornes de recharge. Ces bornes de recharge correspondent à des bornes de recharge sélectionnées dans un ensemble de bornes de recharges en fonction d'un ensemble de deuxièmes positions approximatives du véhicule déterminées à des instants antérieurs à l'instant courant. La borne de recharge la plus proche de la première position approximative du véhicule est alors sélectionnée parmi les bornes formant la pluralité de bornes de recharge. Une information représentative de la borne de recharge sélectionnée est enfin transmise à destination du véhicule pour l'informer de la borne de recharge la plus proche de lui à l'instant courant.

La détermination d'une borne de recharge dans un ensemble de bornes de recharge restreint permet de déterminer plus rapidement quelle est la borne de recharge la plus proche, ce qui améliore l'aspect temps réel du procédé. L'utilisation d'une position du véhicule rendue approximative par l'ajout d'une valeur aléatoire à une position plus exacte fournie par le véhicule permet de respecter l'aspect personnel des données en n'utilisant pas des données de position précise du véhicule.

La figure 1 illustre schématiquement un environnement 1 de communication dans lequel évolue un véhicule, selon un exemple de réalisation particulier et non limitatif de la présente invention.

Le véhicule 10 de la figure 1 correspond avantageusement à un véhicule à motorisation électrique, aussi appelé véhicule électrique 10. Un véhicule électrique correspond avantageusement à un véhicule fonctionnant uniquement à l'énergie électrique ou à un véhicule dit hybride, notamment hybride rechargeable, fonctionnant à l'énergie électrique (pour alimenter un moteur électrique) et à l'énergie fossile (pour alimenter un moteur thermique). Chaque véhicule électrique est équipé d'une ou plusieurs batteries de traction pour stocker l'énergie électrique en vue d'alimenter le ou les moteurs électriques du véhicule.

La ou les batteries du véhicule 10 permettent de stocker une quantité d'énergie électrique en fonction de la capacité de ces batteries. Lorsque l'état de charge de la batterie atteint un niveau bas, il est alors nécessaire de recharger ces batteries, par exemple via une borne de recharge adaptée pour la charge (ou recharge) de la ou les batteries de véhicules électriques ou hybrides tels que le véhicule 10.

Le véhicule 10 correspond ainsi par exemple à un véhicule terrestre, par exemple une automobile, un camion, un car, une moto. Enfin, le véhicule 10 correspond à un véhicule autonome ou non, c'est-à-dire un véhicule circulant selon un niveau d'autonomie déterminée ou sous la supervision totale du conducteur.

Le véhicule 10 embarque avantageusement un système de géolocalisation par satellite configuré pour déterminer la position courante du véhicule 10, le véhicule 10 embarquant à cet effet un récepteur d'un système de type GPS (de l'anglais « Global Positioning System » ou en français « Système mondial de positionnement ») ou Galileo par exemple en communication avec un calculateur du système embarqué du véhicule 10. La position courante est par exemple exprimée sous la forme de coordonnées, par exemple sous la forme d'un couple latitude/longitude.

Selon une variante, un tel récepteur de système GPS ou Galileo est embarqué dans un dispositif de communication mobile (par exemple un téléphone intelligent, un objet intelligent tel qu'une montre connectée ou une tablette) relié en communication, par exemple sans fil (Bluetooth^{®} ou Wifi^{®}), avec le véhicule 10.

Le véhicule 10 embarque également avantageusement un système de communication configuré pour communiquer avec un ou plusieurs dispositifs distants 101 via une infrastructure d'un réseau de communication sans fil. Le dispositif distant 101 correspond avantageusement à un dispositif configuré pour traiter des données, par exemple des données stockées en mémoire du dispositif distant 101 et/ou des données reçues du véhicule 10. Le dispositif distant 101 correspond par exemple à un serveur du « cloud » 100 (ou « nuage » en français).

Le système de communication du véhicule 10 comprend par exemple une ou plusieurs antennes de communication reliées à une unité de contrôle télématique, dite TCU (de l'anglais « Telematic Control Unit ») (aussi appelée boitier BTA (« Boitier Télématique Autonome ») ou boitier BSRF (« Boitier de Servitudes Radio Fréquence »)), elle-même reliée à un ou plusieurs calculateurs du système embarqué du véhicule 10. La ou les antennes, l'unité TCU et le ou les calculateurs forment par exemple une architecture multiplexée pour la réalisation de différents services utiles pour le bon fonctionnement du véhicule et pour assister le conducteur et/ou les passagers du véhicule dans le contrôle du véhicule 10, par exemple en affichant des informations sur la position des bornes de recharges les plus proches du véhicule 10 sur un dispositif d'affichage embarqué dans le véhicule 10, ces informations étant par exemple reçues du dispositif distant 101. Le ou les calculateurs et l'unité TCU communiquent et échangent des données entre eux par l'intermédiaire d'un ou plusieurs bus informatiques, par exemple un bus de communication de type bus de données CAN (de l'anglais « Controller Area Network » ou en français « Réseau de contrôleurs »), CAN FD (de l'anglais « Controller Area Network Flexible Data-Rate » ou en français « Réseau de contrôleurs à débit de données flexible »), FlexRay (selon la norme ISO 17458) ou Ethernet (selon la norme ISO/IEC 802-3).

L'infrastructure de communication mobile permettant la communication sans fil de données entre le véhicule 10 et le dispositif de traitement de données distant 101 comprend par exemple ou plusieurs équipements de communication 110 de type antenne relais (réseau cellulaire) ou unité bord de route, dite UBR. Dans un mode de communication utilisant une telle architecture réseau, les données sont par exemple transmises par le véhicule 10 au dispositif distant 101 du « cloud » 100 via une antenne relais 110 (l'antenne 110 étant par exemple relié au « cloud » 100 via une liaison filaire).

Le système de communication sans fil permettant l'échange de données entre le véhicule 10 et le dispositif distant 101 correspond par exemple à :
- un système de communication véhicule à infrastructure V2I (de l'anglais « vehicle-to-infrastructure »), par exemple basé sur les standards 3GPP LTE-V ou IEEE 802.11p de ITS G5 ; ou
- un système de communication de type réseau cellulaire, par exemple un réseau de type LTE (de l'anglais « Long-Term Evolution » ou en français « Evolution à long terme »), LTE-Advanced (ou en français LTE-avancé) LTE 4G ou 5G ; ou
- un système de communication de type Wifi selon IEEE 802.11, par exemple selon IEEE 802.11n ou IEEE 802.11ac.

Un processus de sélection d'une borne de recharge pour le véhicule 10 est avantageusement mis en œuvre par un dispositif de traitement de données tel que le dispositif distant 101. Une ou plusieurs opérations de ce processus sont par exemple mises en œuvre par un système comprenant le dispositif distant 101 et le véhicule 10 relié en communication au dispositif distant 101 via une connexion ou une liaison sans fil.

Dans une première opération, le dispositif distant 101 (par exemple un ou plusieurs processeurs du dispositif distant 101) reçoit du véhicule 10 des premières données représentatives d'un arrêt ou d'un démarrage du moteur du véhicule 10.

L'arrêt ou le démarrage du moteur est par exemple détecté par un calculateur du véhicule 10 qui transmet l'information au TCU qui transmet alors les premières données à destination du dispositif distant 101 via la liaison sans fil.

Les premières données comprennent avantageusement une information représentative de la position du véhicule 10 à la détection de l'arrêt ou du démarrage du véhicule 10. Cette information prend par exemple la forme d'un ensemble de coordonnées, par exemple sous la forme d'une latitude et d'une longitude. Cette information correspond ainsi par exemple à la position du véhicule 10, dite première position, à un instant courant correspondant à l'instant où le moteur a été arrêté ou démarré.

Dans une deuxième opération, le dispositif distant 101 détermine une première position approximative du véhicule 10 à partir de la première position reçue à la première opération. La première position approximative du véhicule 10 est obtenue ou déterminée en appliquant à cette première position une valeur sélectionnée aléatoirement dans un intervalle de valeurs. Cette valeur correspond par exemple à une distance, par exemple exprimée en mètres, sélectionnée dans un intervalle de distances. L'intervalle de distances est par exemple représenté par une borne inférieure et une borne supérieure, la distance aléatoire pouvant par exemple prendre toute valeur entière comprise entre ces deux bornes (incluant par exemple les bornes). L'intervalle correspond par exemple à un intervalle compris entre 0 et 200 m, entre 0 et 50 m, entre 0 et 100 m, entre 10 et 200 m, entre 50 et 200 m ou entre 10 et 100.

La première position approximative correspond par exemple à toute position du véhicule 10 sur un disque ayant pour centre la première position et de rayon la distance sélectionnée aléatoirement dans l'intervalle.

Selon un autre exemple, la première position approximative correspond par exemple à toute position du véhicule 10 sur un cercle ayant pour centre la première position et de rayon la distance sélectionnée aléatoirement dans l'intervalle.

L'ajout d'une erreur (correspondant à la valeur sélectionnée dans l'intervalle de valeurs) à la première position (en plus de l'erreur lié au système GPS ou Galileo) permet d'utiliser une position approximative du véhicule 10 qui est uniquement représentative de la position exacte du véhicule 10. Le dispositif distant 101 ne stocke ainsi pas en mémoire la première position (mais uniquement la première position approximative) et n'utilise pas la première position (mais uniquement la première position approximative) dans les traitements de données ultérieurs mis en œuvre par ce dispositif distant 101, par exemple pour déterminer la borne de recharge la plus proche du véhicule. Cela permet d'anonymiser la position exacte du véhicule 10 et de respecter les contraintes règlementaires telles que le RGPD.

Les bornes de recharges étant généralement éloignées les unes des autres de plusieurs kilomètres, l'ajout d'une erreur (pouvant aller par exemple jusqu'à 200 m) ne pose pas de problème dans la détermination de la borne la plus proche.

Dans une troisième opération, la première position approximative du véhicule 10 déterminée à la deuxième opération est comparée à une pluralité de de positions chacune associée à une borne de recharge différente, les bornes de recharges dont les positions sont comparées à la première position approximative formant un sous-ensemble de l'ensemble de bornes de recharges existantes sur le territoire dans lequel circule ou évolue le véhicule 10.

Les bornes de recharge dont les positions sont comparées à la première position approximative sont avantageusement sélectionnées parmi l'ensemble de bornes existantes en fonction d'un ensemble de deuxièmes positions approximatives du véhicule déterminées à des instants antérieurs à l'instant courant.

Cet ensemble de deuxièmes positions approximatives correspond par exemple à l'ensemble des positions approximatives du véhicule 10 déterminées lors des arrêts et démarrages du moteur du véhicule pendant un intervalle de temps déterminé et antérieur à l'instant courant. L'intervalle de temps déterminé correspond par exemple à quelques semaines, quelques mois ou une ou plusieurs années. Par exemple l'intervalle de temps déterminé est égal à 3 mois, 6 mois ou 1 an.

Un tel intervalle de temps permet de déterminer les habitudes du conducteur du véhicule 10 en termes de stationnements du véhicule 10, sans cependant utiliser les positions exactes des arrêts et démarrages du véhicule 10, mais uniquement des positions approximatives.

Les habitudes en termes de stationnements du véhicule 10 sont par exemple déterminées de manière statistique, selon toute méthode d'apprentissage statistique connue de l'homme du métier.

Un stationnement du véhicule 10, et la durée de stationnement associée, correspond par exemple à un évènement défini par un arrêt du moteur et par le démarrage du moteur suivant cet arrêt, la durée du stationnement correspondant à l'intervalle temporel compris entre l'instant temporel associé à l'arrêt du moteur et l'instant temporel associé au démarrage du moteur. Les instants temporels d'arrêt et de démarrage sont par exemple compris dans les données représentatives d'arrêt ou de démarrage moteur transmises par le véhicule 10 au dispositif distant 101. Selon une variante, les instants temporels d'arrêt et de démarrage correspondent aux instants de réception par le dispositif distant 101 de ces données d'arrêt et de démarrage moteur.

A cet effet, le dispositif distant 101 reçoit avantageusement, pour chaque arrêt et chaque démarrage du moteur du véhicule 10 effectué pendant l'intervalle de temps déterminé, des deuxièmes données représentatives de chaque arrêt ou chaque démarrage du moteur. Ces deuxièmes données, comme les premières données, sont transmises par le véhicule 10 à destination du dispositif distant 101 à chaque détection d'un arrêt ou d'un démarrage moteur par le véhicule 10. Ces deuxièmes données comprennent une information représentative d'une deuxième position du véhicule associée à un instant temporel particulier (compris dans l'intervalle de temps déterminé), cet instant temporel particulier étant associé à l'arrêt ou au démarrage moteur détecté.

Pour chaque deuxième position reçue dans les deuxièmes données, le dispositif distant 101 applique une valeur de distance sélectionnée aléatoirement dans l'intervalle de valeurs de distances décrit ci-dessus pour déterminer une deuxième position approximative. Tout comme la première position approximative, la deuxième position approximative permet de respecter les contraintes liées au traitement des données personnelles en appliquant une erreur aléatoire à la position réelle du véhicule 10, ce qui permet de ne pas connaitre avec précision la position du véhicule 10 ni son trajet.

L'ensemble des deuxièmes positions approximatives ainsi déterminées sont par exemple stockées en mémoire du dispositif distant 101, par exemple en relation avec un identifiant du véhicule 10 transmis dans les deuxièmes données.

Un tel identifiant correspond par exemple au numéro VIN (de l'anglais « Vehicle Identification Number » ou en français « Numéro d'identification de véhicule ») du véhicule 10.

Un ensemble de zones de stationnement du véhicule 10 est déterminé à partir de l'ensemble de deuxièmes positions approximatives du véhicule 10 obtenues pendant l'intervalle de temps déterminé (par exemple 6 mois). Les deuxièmes positions approximatives les plus proches les unes des autres sont par exemple regroupées pour former l'ensemble de zones de stationnement. Un stationnement du véhicule 10 correspond par exemple à un emplacement géographique définie par la deuxième position approximative déterminée pour un arrêt du moteur du véhicule 10 et par la deuxième position approximative déterminée pour le démarrage du moteur suivant ledit arrêt.

Les stationnements identifiés du véhicule 10 sont par exemple groupés en fonction de leurs localisations, les stationnements appartenant à une même zone d'un diamètre égale à par exemple 50, 100 ou 200 m étant regroupés pour former une zone de stationnement. La localisation d'une zone de stationnement correspond par exemple à la moyenne des deuxièmes positions approximatives associés aux stationnements regroupés dans cette zone.

Les bornes de recharge sélectionnées pour la comparaison de leurs localisations avec la première position approximative correspondent par exemple aux bornes de recharge les plus proches des zones de stationnement parmi l'ensemble de bornes de recharge existantes sur le territoire sur lequel évolue le véhicule 10.

La localisation de chaque borne de recharge d'une liste de bornes de recharges est par exemple comparée à chaque localisation d'une zone de stationnement de l'ensemble de zones de stationnement. Chaque borne de recharge localisée à moins d'une distance déterminée (par exemple 200, 500, 1000, 2000 m) d'une localisation d'une zone de stationnement de l'ensemble de zones de stationnement est ainsi sélectionnée pour former la pluralité de bornes de stationnement auxquels sera comparée la première position approximative du véhicule 10.

La sélection d'une liste restreinte de bornes de recharge permet d'accélérer la comparaison entre la première position approximative et les positions de chacune des bornes de recharge de cette liste restreinte.

La détermination de l'ensemble de zones de stationnement est par exemple obtenue par une méthode d'apprentissage statistique à partir de l'ensemble de deuxièmes positions approximatives.

Selon un mode de réalisation particulier de l'invention, un rang est associé à chaque zone de stationnement identifiée pour le véhicule 10. Un tel rang représente par exemple un niveau d'importance de la zone de stationnement, et est par exemple représentatif de la fréquentation de la zone de stationnement par le véhicule 10.

Un tel rang correspond par exemple à un entier compris par exemple entre 1 et 5 ou entre 1 et 10. Le rang 1 représente le rang le plus élevé (c'est-à-dire qu'une zone de stationnement de rang 1 correspond à une zone de fréquentation la plus élevée) alors qu'un rang 5 (ou 10) représente le rang le moins élevé (c'est-à-dire qu'une zone de stationnement de rang 5 (ou 10) correspond à une zone de fréquentation la plus faible).

Un rang associé à une zone de stationnement déterminée est obtenu en fonction du nombre d'occurrences des stationnements du véhicule 10 dans cette zone déterminée, le nombre d'occurrences étant obtenu à partir des deuxièmes positions approximatives. Par exemple, plus le nombre d'occurrences pour une zone est élevée, plus le rang associé est élevé. Selon une variante, le nombre d'occurrences est pondérée d'une valeur représentative de la moyenne des durées de stationnement du véhicule 10 dans une zone déterminée pour déterminer le rang. Ainsi, selon cette variante, plus la moyenne des durées de stationnement du véhicule 10 dans une zone de stationnement déterminée est élevée, plus le coefficient de pondération sera élevé. Cela permet d'augmenter le rang pour les zones de stationnement dans lesquelles le véhicule 10 reste le plus longtemps (par exemple le domicile ou le lieu de travail). En effet, un stationnement de durée élevée offre plus d'opportunités et plus de temps pour recharger la ou les batteries du véhicule 10 en utilisant la borne de recharge proche d'une telle zone de stationnement.

Le rang est par exemple utilisé pour la sélection des bornes de recharge de la liste restreinte. Par exemple, la ou les bornes de recharge à proximité d'une zone de stationnement de rang élevé (par exemple rang 1 ou 2) sont sélectionnées en priorité ou en plus grand nombre par rapport à la ou les bornes de recharge à proximité d'une zone de stationnement de rang plus faible (par exemple rang 4 ou 5).

Dans une quatrième opération, la borne de recharge la plus proche de la première position approximative est sélectionnée dans la liste restreinte de bornes de recharge en fonction du résultat de la comparaison.

La détermination de la borne de recharge la plus proche met en œuvre une recherche des plus proches voisins, selon toute méthode connue de l'homme du métier.

Par exemple, la recherche de la borne la plus proche est mise en œuvre sur la base de la méthode des K plus proches voisins (de l'anglais « k-Nearest Neighbor »), la méthode de l'arbre de dimension k (de l'anglais « k-d tree » ou « k-dimensional tree ») ou encore la méthode de l'arbre à balles (de l'anglais « Tree Ball algorithm »). Ces méthodes sont par exemple décrites dans le document intitulé « A review of various k-Nearest Neighbor query processing techniques » et publié par S. Dhanabal et Dr. S. Chandramathi dans « International Journal of Computer Application » le 7 octobre 2011.

Dans une cinquième opération, le dispositif distant 101 transmet à destination du véhicule 10 une information représentative de la borne de recharge sélectionnée, via la liaison ou la connexion sans fil.

Cette information comprend par exemple des données représentatives de localisation de la borne de recharge (par exemple les coordonnées GPS) et/ou un identifiant de la borne de recharge sélectionnée.

Le véhicule 10 est ainsi informé en temps réel des bornes de recharge à proximité de sa position à chaque fois que le moteur est arrêté ou démarré.

Selon une variante de réalisation, l'information représentative de la borne de recharge sélectionnée est transmise uniquement à réception, par le dispositif distant 101, d'une requête de transmission d'une telle information émise par le véhicule 10 à destination du dispositif distant 101.

Une telle requête est par exemple générée par une action utilisateur (par exemple le conducteur du véhicule 10) via une interface homme-machine (IHM) embarquée dans le véhicule 10 (par exemple un appui tactile sur une icône affichée sur un écran du véhicule 10). Selon un autre exemple, l'IHM est affichée sur un écran d'un dispositif de communication mobile (par exemple un téléphone intelligent) relié en communication sans fil avec le TCU du véhicule 10 (par exemple en Bluetooth^{®} ou en Wifi^{®}). La requête est ainsi générée par le dispositif de communication mobile, transmise par le dispositif de communication mobile au véhicule 10 (au TCU) qui la retransmet à destination du dispositif distant 101 via la liaison ou connexion sans fil.

A réception de l'information représentative de la borne de recharge sélectionnée, le véhicule 10 affiche cette information sur un écran d'affichage embarqué dans le véhicule 10, par exemple un écran intégré du véhicule 10 ou un écran d'un dispositif de communication mobile relié en communication avec le véhicule 10.

Cette information est affichée automatiquement (sans action utilisateur) ou uniquement sur requête d'un utilisateur, par exemple le conducteur, via par exemple une IHM affichée sur l'écran d'affichage. Selon une variante, l'affichage est déclenché automatiquement par le véhicule lorsque l'état de charge de la batterie du véhicule atteint un seuil minimal (par exemple 20 ou 30 % de la charge maximale).

L'affichage de l'information prend par exemple la forme d'un affichage d'un texte ou d'une icône informant le conducteur de la proximité d'une borne de recharge. Selon un autre exemple, l'affichage prend la forme d'une mise en évidence de la borne de recharge sur une carte routière de l'environnement du véhicule 10 contrôlée par le système de navigation du véhicule 10 (ou d'une application mobile installée sur le dispositif de communication mobile), avec par exemple le tracé d'un itinéraire pour rejoindre cette borne de recharge.

La figure 2 illustre schématiquement un dispositif 2 configuré pour sélectionner une borne de recherche pour un véhicule à motorisation électrique, par exemple le véhicule 10, selon un exemple de réalisation particulier et non limitatif de la présente invention. Le dispositif 2 correspond par exemple à un dispositif de traitement de données ou de calcul tel que le dispositif distant 101.

Selon une variante, le dispositif 2 correspond à un calculateur du véhicule 10, par exemple un calculateur configuré pour détecter l'arrêt ou le démarrage du moteur du véhicule 10 ou une unité de communication de type TCU.

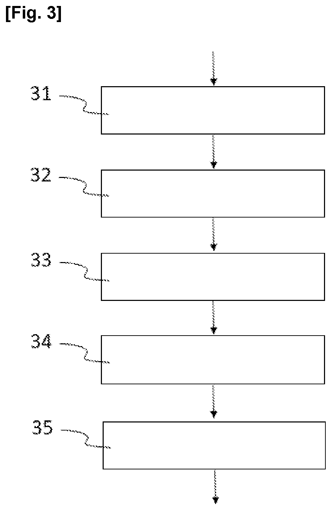

Le dispositif 2 est par exemple configuré pour la mise en œuvre des opérations décrites en regard de la figure 1 et/ou des étapes du procédé décrit en regard de la figure 3. Des exemples d'un tel dispositif 2 comprennent, sans y être limités, un ordinateur, un serveur, un ordinateur portable, un téléphone intelligent, une tablette, un ordinateur portable ou un équipement électronique embarqué tel qu'un ordinateur de bord d'un véhicule, un calculateur électronique tel qu'une UCE (« Unité de Commande Electronique »). Les éléments du dispositif 2, individuellement ou en combinaison, peuvent être intégrés dans un unique circuit intégré, dans plusieurs circuits intégrés, et/ou dans des composants discrets. Le dispositif 2 peut être réalisé sous la forme de circuits électroniques ou de modules logiciels (ou informatiques) ou encore d'une combinaison de circuits électroniques et de modules logiciels.

Le dispositif 2 comprend un (ou plusieurs) processeur(s) 20 configurés pour exécuter des instructions pour la réalisation des étapes du procédé et/ou pour l'exécution des instructions du ou des logiciels embarqués dans le dispositif 2. Le processeur 20 peut inclure de la mémoire intégrée, une interface d'entrée/sortie, et différents circuits connus de l'homme du métier. Le dispositif 2 comprend en outre au moins une mémoire 21 correspondant par exemple à une mémoire volatile et/ou non volatile et/ou comprend un dispositif de stockage mémoire qui peut comprendre de la mémoire volatile et/ou non volatile, telle que EEPROM, ROM, PROM, RAM, DRAM, SRAM, flash, disque magnétique ou optique.

Le code informatique du ou des logiciels embarqués comprenant les instructions à charger et exécuter par le processeur est par exemple stocké sur la mémoire 21.

Selon différents exemples de réalisation particuliers et non limitatifs, le dispositif 2 est couplé en communication avec d'autres dispositifs ou systèmes similaires et/ou avec des dispositifs de communication, par exemple une TCU (de l'anglais « Telematic Control Unit » ou en français « Unité de Contrôle Télématique »), par exemple par l'intermédiaire d'un bus de communication ou au travers de ports d'entrée / sortie dédiés.

Selon un exemple de réalisation particulier et non limitatif, le dispositif 2 comprend un bloc 22 d'éléments d'interface pour communiquer avec des dispositifs externes, par exemple un serveur distant ou le « cloud » lorsque le dispositif 2 correspond à une TCU, ou inversement avec une TCU lorsque le dispositif 2 correspond à un serveur. Les éléments d'interface du bloc 22 comprennent une ou plusieurs des interfaces suivantes :
- interface radiofréquence RF, par exemple de type Wi-Fi^{®} (selon IEEE 802.11), par exemple dans les bandes de fréquence à 2,4 ou 5 GHz, ou de type Bluetooth^{®} (selon IEEE 802.15.1), dans la bande de fréquence à 2,4 GHz, ou de type Sigfox utilisant une technologie radio UBN (de l'anglais Ultra Narrow Band, en français bande ultra étroite), ou LoRa dans la bande de fréquence 868 MHz, LTE (de l'anglais « Long-Term Evolution » ou en français « Evolution à long terme »), LTE-Advanced (ou en français LTE-avancé) ;
- interface USB (de l'anglais « Universal Serial Bus » ou « Bus Universel en Série » en français) ;
- interface HDMI (de l'anglais « High Definition Multimedia Interface », ou « Interface Multimedia Haute Definition » en français) ;
- interface LIN (de l'anglais « Local Interconnect Network », ou en français « Réseau interconnecté local »).

Des données sont par exemples chargées vers le dispositif 2 via l'interface du bloc 22 en utilisant un réseau Wi-Fi^{®} tel que selon IEEE 802.11, un réseau ITS G5 basé sur IEEE 802.11p ou un réseau mobile tel qu'un réseau 4G (ou 5G) basé sur la norme LTE (de l'anglais Long Term Evolution) définie par le consortium 3GPP notamment un réseau LTE-V2X.

Selon un autre exemple de réalisation particulier et non limitatif, le dispositif 2 comprend une interface de communication 23 qui permet d'établir une communication avec d'autres dispositifs (tels que d'autres calculateurs du système embarqué ou d'autres serveurs) via un canal de communication 230. L'interface de communication 23 correspond par exemple à un transmetteur configuré pour transmettre et recevoir des informations et/ou des données via le canal de communication 230. L'interface de communication 23 correspond par exemple à un réseau filaire de type CAN (de l'anglais « Controller Area Network » ou en français « Réseau de contrôleurs »), CAN FD (de l'anglais « Controller Area Network Flexible Data-Rate » ou en français « Réseau de contrôleurs à débit de données flexible »), FlexRay (standardisé par la norme ISO 17458) ou Ethernet (standardisé par la norme ISO/IEC 802-3).

Selon un exemple de réalisation particulier et non limitatif, le dispositif 2 peut fournir des signaux de sortie à un ou plusieurs dispositifs externes, tels qu'un écran d'affichage, tactile ou non, un ou des haut-parleurs et/ou d'autres périphériques (système de projection) via des interfaces de sortie respectives. Selon une variante, l'un ou l'autre des dispositifs externes est intégré au dispositif 2.

La figure 3 illustre un organigramme des différentes étapes d'un procédé de sélection d'une borne de recherche pour un véhicule à motorisation électrique, par exemple le véhicule 10, selon un exemple de réalisation particulier et non limitatif de la présente invention. Le procédé est par exemple mis en œuvre par un dispositif distant tel que le dispositif distant 101 ou par le dispositif 2 de la figure 2.

Dans une première étape 31, des premières données représentatives d'arrêt ou démarrage d'un moteur du véhicule à un instant courant sont reçues via une liaison sans fil. Ces premières données comprennent avantageusement une information représentative d'une première position du véhicule à l'instant courant.

Dans une deuxième étape 32, une première position approximative du véhicule à l'instant courant est déterminée en appliquant à la première position une première distance sélectionnée aléatoirement dans un intervalle déterminé de distances.

Dans une troisième étape 33, la première position approximative est comparée avec une pluralité de positions associées à une pluralité de bornes de recharge. Cette pluralité de bornes de recharge est sélectionnée dans un ensemble de bornes de recharges en fonction d'un ensemble de deuxièmes positions approximatives du véhicule déterminées à des instants antérieurs à l'instant courant.

Dans une quatrième étape 34, la borne de recharge la plus proche de la première position approximative du véhicule est sélectionnée dans la pluralité de bornes de recharge.

Dans une cinquième étape 35, une information représentative de la borne de recharge sélectionnée est transmise à destination du véhicule.

Selon une variante, les variantes et exemples des opérations décrits en relation avec la figure 1 s'appliquent aux étapes du procédé de la figure 3.

Bien entendu, la présente invention ne se limite pas aux exemples de réalisation décrits ci-avant mais s'étend à un procédé de communication pour un véhicule à motorisation électrique qui inclurait des étapes secondaires sans pour cela sortir de la portée de la présente invention. Il en serait de même d'un dispositif configuré pour la mise en œuvre d'un tel procédé.

La présente invention concerne également un système comprenant le dispositif 2 et le véhicule 10, le véhicule 10 étant relié en communication avec le dispositif 2 via une liaison ou une connexion sans fil.

## Revendications

1. Procédé de sélection d'une borne de recharge pour un véhicule (10) à motorisation électrique, ledit procédé comprenant les étapes suivantes :
- réception (31) par un dispositif de sélection d'une borne de recharge pour un véhicule, via une liaison sans fil, de premières données représentatives d'arrêt ou démarrage d'un moteur dudit véhicule (10) à un instant courant, lesdites premières données comprenant une information représentative d'une première position dudit véhicule (10) audit instant courant ;
- détermination (32) par le dispositif de sélection d'une première position approximative dudit véhicule (10) audit instant courant en appliquant à ladite première position une première distance sélectionnée aléatoirement dans un intervalle déterminé de distances, ladite première position n'étant pas stockée en mémoire du dispositif de sélection et n'étant pas utilisée dans les traitements de données ultérieurs de ce procédé par le dispositif de sélection ;
- comparaison (33) par le dispositif de sélection de ladite première position approximative avec une pluralité de positions associées à une pluralité de bornes de recharge, ladite pluralité de bornes de recharge étant sélectionnées dans un ensemble de bornes de recharges en fonction d'un ensemble de deuxièmes positions approximatives dudit véhicule (10) déterminées à des instants antérieurs audit instant courant ;
- sélection (34) par le dispositif de sélection de la borne de recharge la plus proche de ladite première position approximative dudit véhicule (10) dans ladite pluralité de bornes de recharge ;
- transmission (35) par le dispositif de sélection, via ladite liaison sans fil, d'une information représentative de ladite borne de recharge sélectionnée à destination dudit véhicule (10).

2. Procédé selon la revendication 1, comprenant en outre les étapes suivantes, pour chaque arrêt et chaque démarrage dudit moteur dudit véhicule (10) pendant un intervalle temporel antérieur audit instant courant :
- réception par le dispositif de sélection, via ladite liaison sans fil, de deuxièmes données représentatives dudit chaque arrêt ou chaque démarrage, lesdites deuxièmes données comprenant une information représentative d'une deuxième position dudit véhicule (10) associée à un instant temporel particulier dudit intervalle temporel antérieur ;
- détermination par le dispositif de sélection d'une deuxième position approximative dudit ensemble de deuxièmes positions approximatives dudit véhicule (10) audit instant temporel particulier en appliquant à ladite deuxième position une deuxième distance sélectionnée aléatoirement dans ledit intervalle déterminé de distances.

3. Procédé selon la revendication 2, comprenant en outre les étapes suivantes :
- détermination par le dispositif de sélection d'un ensemble de zones de stationnement dudit véhicule (10) à partir des deuxièmes positions approximatives associées à un arrêt dudit moteur et des deuxièmes positions approximatives associées à un démarrage dudit moteur ;
- sélection par le dispositif de sélection de ladite pluralité de bornes de recharge dans ledit ensemble de bornes de recharges en fonction dudit ensemble de zones de stationnement, ladite pluralité de bornes de recharge sélectionnées correspondant aux bornes de recharges dudit ensemble localisées à une distance inférieure à un seuil déterminé de ladite chaque zone de stationnement.

4. Procédé selon la revendication 3, comprenant en outre une association d'un rang à chaque zone de stationnement dudit ensemble, ledit rang étant déterminé en fonction d'un nombre d'occurrences de stationnement dudit véhicule (10) dans ladite chaque zone de stationnement et d'une durée de stationnement dudit véhicule (10) pour chaque stationnement dans ladite chaque zone de stationnement, ladite durée correspondant à un instant temporel entre un arrêt dudit moteur et le démarrage dudit moteur suivant ledit arrêt.

5. Procédé selon l'une des revendications 1 à 4, pour lequel ledit intervalle déterminé de distances correspond à un intervalle compris entre 0 et 200 m.

6. Procédé selon l'une des revendications 1 à 5, pour lequel ladite sélection de la borne de recharge comprend une mise en œuvre d'une méthode de recherche des plus proches voisins.

7. Procédé selon l'une des revendications 1 à 6, comprenant en outre une étape d'affichage d'une information représentative de localisation de ladite borne de recharge sélectionnée sur un écran d'affichage embarqué dans ledit véhicule (10).

8. Programme d'ordinateur comportant des instructions pour la mise en œuvre du procédé selon l'une quelconque des revendications 1 à 6, lorsque ces instructions sont exécutées par un processeur.

9. Dispositif (2) de sélection d'une borne de recharge pour un véhicule à motorisation électrique, ledit dispositif (2) comprenant une mémoire (21) associée à au moins un processeur (20) configuré pour la mise en œuvre des étapes du procédé selon l'une quelconque des revendications 1 à 6.

10. Système comprenant le dispositif (2) de sélection d'une borne de recharge selon la revendication 9 et un véhicule (10) à motorisation électrique relié en communication audit dispositif de sélection d'une borne de recharge, ledit système étant configuré pour la mise en œuvre des étapes du procédé selon l'une quelconque des revendications 1 à 7.

## Patentansprüche

1. Verfahren zum Auswählen einer Ladestation für ein elektrisch betriebenes Fahrzeug (10), wobei das Verfahren die folgenden Schritte umfasst:
- Empfangen (31) durch eine Vorrichtung zum Auswählen einer Ladestation für ein Fahrzeug über eine drahtlose Verbindung die ersten repräsentativen Daten des Abschaltens oder Startens eines Motors des Fahrzeugs (10) zu einem aktuellen Zeitpunkt, wobei die ersten Daten Informationen umfassen, die für eine erste Position des Fahrzeugs repräsentativ sind (10) aktuelle Zeit;
- Bestimmung (32) einer ersten ungefähren Position des Fahrzeugs (10) durch die Wählvorrichtung der aktuellen Zeit durch Anwendung einer ersten Strecke, die innerhalb eines bestimmten Entfernungsintervalls zufällig ausgewählt wurde, wobei die erste Position nicht im Speicher des Wahlschalters gespeichert und bei der nachfolgenden Datenverarbeitung dieses Verfahrens durch den Wahlschalter nicht verwendet wird;
- Vergleich (33) durch die Vorrichtung zum Auswählen der ersten ungefähren Position mit einer Vielzahl von Positionen, die mit einer Vielzahl von Ladestationen verbunden sind, wobei die Mehrzahl von Ladestationen aus einem Satz von Ladestationen ausgewählt wird, die auf einem Satz zweiter ungefährer Positionen des Fahrzeugs (10) basieren, die zu Zeiten vor dem aktuellen Zeitpunkt bestimmt wurden;
- Auswahl (34) durch die Vorrichtung zum Auswählen der Ladestation, die dem Fahrzeug am nächsten liegt die erste ungefähre Position des Fahrzeugs (10) in der Mehrzahl von Ladestationen;
- Übertragung (35) von Informationen, die für die ausgewählte Ladestation repräsentativ sind, durch die Auswahlvorrichtung über die drahtlose Verbindung an das Fahrzeug (10).

2. Verfahren nach Anspruch 1, das ferner die folgenden Schritte umfasst, für jedes Anhalten und Starten des Motors des Fahrzeugs (10) während eines Zeitintervalls vor der aktuellen Zeit:
- Empfangen von zweiten Daten, die für jedes Anhalten oder Starten repräsentativ sind, durch die Auswahlvorrichtung über die drahtlose Verbindung, wobei die zweiten Daten Informationen umfassen, die für eine zweite Position des Fahrzeugs (10) repräsentativ sind, die einer Zeit zugeordnet ist das vorherige Zeitintervall
- Bestimmung einer zweiten ungefähren Position des Satzes zweiter ungefährer Positionen des Fahrzeugs (10) der bestimmten Zeit durch Anwendung auf die zweite Position, die zufällig in der angegebenen Entfernung von Entfernungen ausgewählt wurde.

3. Verfahren nach Anspruch 2, das ferner die folgenden Schritte umfasst:
- Bestimmung durch die Vorrichtung zur Auswahl eines Satzes von Parkflächen des Fahrzeugs (10) aus den ungefähren zweiten Positionen, die mit einem Abschalten des Motors verbunden sind, und den zweiten ungefähren Positionen, die mit dem Starten des Motors verbunden sind;
- Auswahl durch die Vorrichtung zum Auswählen der Mehrzahl von Ladestationen aus dem Satz von Ladestationen gemäß der Baugruppe; von Parkzonen, wobei die Mehrzahl ausgewählter Ladestationen, die den Ladestationen der genannten Gruppe entsprechen, die sich in einem Abstand unterhalb einer bestimmten Schwelle der jeweiligen Parkzone befinden.

4. Verfahren nach Anspruch 3, das ferner eine Zuordnung eines Rangs zu jedem Parkplatz der Versammlung umfasst, wobei der Rang auf der Grundlage einer Anzahl von Parkfällen des Fahrzeugs (10) auf jedem Parkplatz und einer Parkzeit des Fahrzeugs (10) für jedes Parken auf jedem Parkplatz bestimmt wird, Die Dauer entspricht einem zeitlichen Moment zwischen dem Abschalten des Motors und dem Starten des Motors nach dem Abschalten.

5. Verfahren nach einem der Ansprüche 1 bis 4, wobei der angegebene Entfernungsbereich einem Intervall zwischen 0 und 200 m entspricht.

6. Verfahren nach einem der Ansprüche 1 bis 5, wobei die Auswahl der Ladestation eine Implementierung eines Verfahrens zur Suche nach nächsten Nachbarn umfasst.

7. Verfahren nach einem der Ansprüche 1 bis 6, das ferner einen Schritt umfasst, bei dem repräsentative Informationen über den Standort der ausgewählten Ladestation auf einem On-Board-Anzeigebildschirm in dem Fahrzeug (10) angezeigt werden.

8. Computerprogramm, das Anweisungen zum Ausführen des Verfahrens nach einem der Ansprüche 1 bis 6 enthält, wenn solche Anweisungen von einem Prozessor ausgeführt werden.

9. Vorrichtung (2) zum Auswählen einer Ladestation für ein elektrisch betriebenes Fahrzeug, wobei die Vorrichtung (2) einen Speicher (21) umfasst, der mindestens einem Prozessor (20) zugeordnet ist, der zum Ausführen der Verfahrensschritte nach einem der Ansprüche 1 bis 6 konfiguriert ist.

10. System, umfassend die Vorrichtung (2) zur Auswahl einer Ladestation nach Anspruch 9 und ein elektrisch betriebenes Fahrzeug (10), das in Kommunikation mit der Vorrichtung zur Auswahl einer Ladestation verbunden ist, wobei das System für die Durchführung der Verfahrensschritte nach einem der Ansprüche 1 bis 7 konfiguriert ist.

## Claims

1. Method for selecting a charging station for an electrically powered vehicle (10), said method comprising the following steps:
- receiving (31) by a device for selecting a charging station for a vehicle, via a wireless link, the first representative data of the shutdown or start of an engine of said vehicle (10) at a current time, said first data comprising information representative of a first position of said vehicle (10) said current time;
- determination (32) by the selector device of a first approximate position of said vehicle (10) said current time by applying to said first position a first distance randomly selected within a specified interval of distances, said first position not being stored in the memory of the selector and not being used in the subsequent data processing of this method by the selector;
- comparison (33) by the device for selecting said first approximate position with a plurality of positions associated with a plurality of charging stations, said plurality of charging stations being selected from a set of charging stations based on a set of second approximate positions of said vehicle (10) determined at times prior to said current instant;
- selection (34) by the device for selecting the nearest charging station to said the first approximate position of said vehicle (10) in said plurality of charging stations;
- transmission (35) by the selection device, via said wireless link, of information representative of said selected charging station to said vehicle (10).

2. A method according to claim 1, further comprising the following steps, for each stop and start of said engine said vehicle (10) during a time interval prior to said current time:
- reception by the selection device, via said wireless link, of second data representative of said each stop or start, said second data comprising information representative of a second position of said vehicle (10) associated with a time said prior time interval.
- determination by the selection device of a second approximate position of said set of second approximate positions of said vehicle (10) said particular time time by applying to said second position randomly selected in said specified distance of distances.

3. A method according to claim 2, further comprising the following steps:
- determination by the device for selecting a set of parking areas of said vehicle (10) from the approximate second positions associated with a shutdown of said engine and the second approximate positions associated with starting said engine;
- selection by the device for selecting said plurality of charging stations from said set of charging stations according to said assembly; of parking zones, said plurality of selected charging stations corresponding to the charging stations of the said set located at a distance below a specified threshold of said each parking zone.

4. A method according to claim 3, further comprising an association of one rank to each parking area of said assembly, said rank being determined based on a number of instances of parking of said vehicle (10) in said each parking area and a parking time of said vehicle (10) for each parking in said each parking area, said duration corresponding to a temporal moment between a shutdown of said engine and the start of said engine following said shutdown.

5. A method according to any one of claims 1 to 4, wherein said specified distance range corresponds to an interval between 0 and 200 m.

6. A method according to any one of claims 1 to 5, wherein said selection of the charging station comprises an implementation of a method for searching for nearest neighbours.

7. A method according to one of claims 1 to 6, further comprising a step of displaying representative information of the location of said selected charging station on an on-board display screen in said vehicle (10).

8. A computer program containing instructions for carrying out the method according to any one of claims 1 to 6, when such instructions are executed by a processor.

9. A device (2) for selecting a charging station for an electrically powered vehicle, said device (2) comprising a memory (21) associated with at least one processor (20) configured for carrying out the process steps according to any one of claims 1 to 6.

10. A system comprising the device (2) for selecting a charging station according to claim 9 and an electrically powered vehicle (10) connected in communication to said device for selecting a charging station, said system being configured for carrying out the process steps according to any one of claims 1 to 7.
